Europäisches Patentamt

European Patent Office

Office européen des brevets

(19)

(11) Publication number: **0 139 321**
**B1**

(12) **EUROPEAN PATENT SPECIFICATION**

(45) Date of publication of patent specification: **03.02.88**

(21) Application number: **84201248.6**

(22) Date of filing: **28.08.84**

(51) Int. Cl.⁴: **A 62 D 3/00,** C 03 B 17/04, C 03 B 5/187, C 03 B 5/16

(54) **Process and apparatus for rendering harmless, dangerous chemical waste material.**

(30) Priority: **09.09.83 NL 8303132**

(43) Date of publication of application:
**02.05.85 Bulletin 85/18**

(45) Publication of the grant of the patent:
**03.02.88 Bulletin 88/05**

(84) Designated Contracting States:
**AT BE CH DE FR GB IT LI LU NL SE**

(56) References cited:
**EP-A-0 010 274**
**GB-A-2 090 045**
**US-A-2 371 213**
**US-A-3 420 649**

(73) Proprietor: **Openbare Afvalstoffenmaatschappij voor het Vlaamse Gewest**
**Kanunnik de Deckerstraat 22-26**
**Mechelen (BE)**
(73) Proprietor: **Duivelaar, Patrick Gregory**
**Sparrendal 488**
**NI-3142 LP Maassluis (NL)**

(72) Inventor: **Duivelaar, Machiel Nicolaas**
**Sparrendal 488**
**NL-3142 LP Maassluis (NL)**

(74) Representative: **den Boer, Jan Johannes, Ir.**
**et al**
**Octrooibureau Polak & Charlouis Laan Copes**
**van Cattenburch 80**
**NL-2585 GD The Hague (NL)**

Courier Press, Leamington Spa, England.

## Description

The invention relates to a process for rendering harmless dangerous chemical waste material by mixing it with a glass material.

A similar process is known in which the mineral material comprises complex barium- and calcium titanates. Particularly these are adapted to form a solid solution with the radio-active acid which is released when working up used fuel of nuclear reactors. Thereafter the obtained solid powder is filled into metal containers which are compressed at high pressure and temperature into discs, which may be stored in a so-called waste container having a lead shield, which are known for storing radio-active waste and said containers may be stored in the sea or below earth level. The formed solid material is well and through prolongued periods resistant to all geochemical and geological circumstances. The process is known as the Syn-roc-process.

There is also known a process whereby radio-active waste is melted at a temperature of about 1150—1400°C in boro-silicateglas, whereafter the melt is solidified in the shape of marbles or pellets in a rotating plate and the pellets are filled into steel containers, which are filled with molten lead, the containers having a double outer wall, which likewise is filled with lead.

The invention aims at rendering harmless organic and inorganic chemical waste in a less expensive way than with the above mentioned known technics. Moreover, the encapsulating glass material used must remain intact under all conceivable circumstances so that the chemical waste cannot again be set free. The process may also be used for nuclear waste if suitable additional measures are taken.

This aim is according to the invention achieved in that the waste material, which is in liquid or powder condition, is supplied to a closed container, thereafter the air present in said material is removed from the container through evacuation and in this condition the material is mixed under pressure with liquid ordinary silica glass and after completion of the mixing is solidified through cooling in the shape of cylinders, rods, blocks, pellets or similar objects.

The advantage of the use of common silica glass is that it is cheap, and, moreover, has a lower melting point than the special borosilicate glass (800°C instead of 1150—1400°C) whereby less heating costs are involved and at which lower temperature the corrosivity of the glass is much less.

For completeness' sake some further art is discussed at this point.

EP—A—0010274 relates to a process for mixing waste solutions containing Co and Mn with glass, and from this glass mixture objects can then be made, e.g. beverage bottles. According to examples 1 and 2 thereof the waste solution is sprayed on molten glass having a temperature of 1000°C, whereby the water in the solution vaporizes. According to the other examples the waste solution is first dried or converted to a mixture of oxides and then mixed with for instance a ground glazing substance. Thereafter the so obtained mixture is melted. Not only in this process only suitable for certain wastes, namely Co, Mn and the like, but there is neither mixing of the waste material with molten glass under pressure in a closed container.

GB—A—2 090 045 relates to a process, wherein (radioactive) waste is mixed with bitumen (and not glass) at 200°C by means of an extrusion screw.

US—A—3,420,649 relates to the production of glass rods made entirely from a refractory material. There is no suggestion in this patent to mix waste material with molten glass and neither is there any suggestion of carrying out the mixing under pressure.

US—A—2,371,213 relates to a process, wherein powdery glass or siliceous material is encapsulated by solidifying molten glass, whereby bodies are obtained, vide figure 6 of this patent. These bodies are fully melted in a second furnace. The object is to prevent that the powdery glass material generates dust in the glass factory or in the atmosphere, when it is added to a furnace containing molten glass. Again there is no suggestion of the measures necessary in the present process.

In the present process the free oxygen has to be removed from the waste material since due to the high temperature of the liquid glass said oxygen could react with the waste material and give rise to explosions.

The formed cylinders, blocks or pellets are harmless and may e.g. be dumped into the sea whereby, moreover, they grow algae or similar organisms in relative short time.

Under certain circumstances, e.g. when the waste material comprises much air, it may be advantageous to heat the waste material prior to evacuation, in a separate container, for driving out part of the air present therein.

In the case of inorganic waste material the mixing is carried out preferably by pressing the glass in liquid condition into the container wherein the waste material has been introduced. For organic waste material preferably the reverse sequence is used; the waste material is pressed into the liquid glass, whereby it is destroyed for the greater part by the occurring pyrolysis.

The invention also relates to an apparatus for carrying out the process according to the invention.

This apparatus comprises as the container a mixing cylinder provided with an evacuating conduit, supply means for supplying waste material and supply means for supplying liquid glass.

In a first embodiment according to the invention the mixing cylinder is drivable in rotation around its axis and comprises a helical groove in its interior wall, a mixing grid, which is reciprocatable in the longitudinal direction of the cylinder due to engagement with the groove and to the rotation, as well as a removal piston reciprocatable in the longitudinal direction of the cylinder.

In order to remove the mixture which has solidified into plastic condition from the cylinder it is advantageous if the mixing cylinder is pivotable by means of pivot pins to a position in which it may be connected to cooling means and to a glass pressing apparatus, in which position the removal piston is drivable in the direction of the glass supply connection of the cylinder.

In a second embodiment the container is a stationary mixing cylinder comprising two longitudinal halves, and provided with a central shaft which is drivable in rotation, on which shaft a helical transportation blade and/or series of mixing blades are provided, and in which the waste material supply connection as well as the glass supply connection are provided at the end of the cylinder opposite to the discharge end of the mixing cylinder, said discharge end being provided with cooling coil means and with an extrusion nozzle.

Thereby the material is continuously extruded in the shape of a strand and thereafter may be divided into rods or in short pieces, which subsequently may be pressed into pellets, marbles or other shapes.

In a third embodiment, which is particularly suitable for inorganic material, the container comprises a part of the glass supply conduit, which may be widened, within which the waste material supply conduit opens, said waste supply conduit being provided along the portion present within the glass supply conduit with outflow apertures, which are provided regularly spaced therein, said combination of conduits being received in a vibration device.

This embodiment is not provided with an evacuating conduit since no oxygen has to be removed from inorganic chemical waste material. Also in this embodiment primarily a rod shaped intermediate product is obtained.

The invention will hereunder be further explained with reference to the drawing, showing some embodiments, given as examples, of the apparatus according to the invention.

Figure 1 shows schematically the first embodiment of the apparatus.

Figure 2 shows the second embodiment,

Figure 3 shows the third embodiment,

Figure 4 shows an elevation of the mixing grid of the first embodiment.

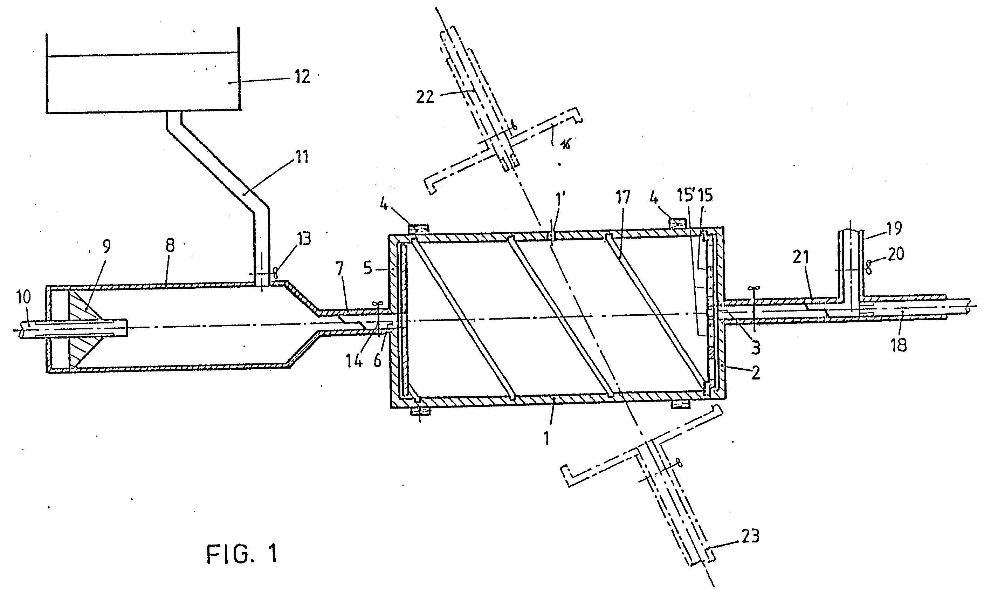

The first embodiment of the apparatus according to figure 1 comprises a cylinder 1, which may be dividable in two halves according to a central divisional plane in the longitudinal direction, the halves of which may be mutually connectable and hermetically closable in known manner. The cylinder may be dividable into two halves in order to be able to clean it interiorly. The cylinder is provided at one end, the right end as seen in figure 1, with an end wall 2, having a central aperture 3. The cylinder is rotatable around its longitudinal axis by means of drive means, which are schematically shown as being gearings 4 on the outer circumference of the cylinder. In the left end wall 5, as seen in figure 1, of the cylinder, likewise a central aperture 6 is provided which is connected with a supply conduit 7 for the waste material. At the other end said conduit 7 is connected to a metering cylinder 8 in which a piston 9, secured to a piston rod 10, is reciprocatingly drivable, e.g. by means of a hydraulic drive unit (not shown). The piston rod 10 is sealingly carried through the endwall of the cylinder 8.

A supply conduit 8 for waste material is connected to an opening in the cylinder 8, the other end of said conduit being connected to a waste supply, e.g. a container 12. A valve means 13 is provided in the conduit 11, whereby the supply of waste material to the metering cylinder 8 may be opened and closed. Likewise a valve means 14 is provided in the supply conduit 7 between the cylinder 8 and the main cylinder 1.

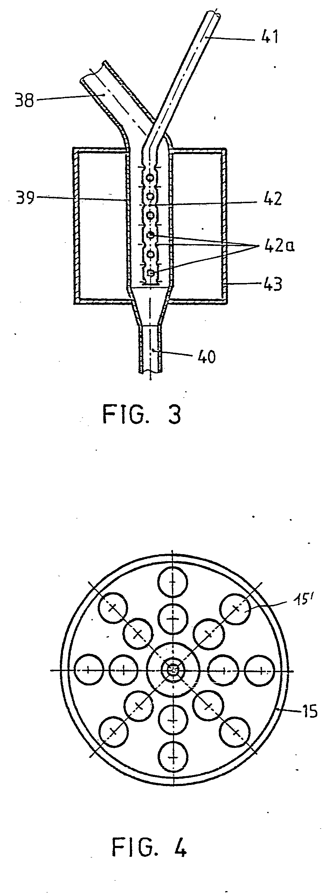

Within the cylinder 1 a plate shaped or differently shaped mixing grid 15 is provided, which is shown enlarged in figure 4, from which it appears that apertures 15' are provided therein in regularly spaced manner.

In the embodiment shown the edge of the mixing grid is in engagement with a helical groove 17 in the interior wall of the cylinder 1. The grid is secured to a drive rod 18 which is prevented to rotate in a manner not shown.

During the supply of the waste material a vacuum conduit (not shown) is connected to an aperture 1' in the cylinder wall for evacuating gases and vapours which may be produced due to the still high temperature of the cylinder, caused by a previous charge.

For a charge the valve 13 is opened whereby the metering cylinder 8 is filled with a predetermined volume of waste material, e.g. a liquid organic material. Thereafter the valve 14 is opened and the piston 9 is moved to the right, whereby the waste material is entered into the cylinder 1. After the valve 14 has been closed molten glass is supplied through a supply conduit 19 and a valve 20 from a melting furnace (not shown) to a conduit 21 connected to the discharge opening 3 and thereby to the cylinder 1. Thereafter the vacuum conduit is uncoupled from the cylinder and the cylinder 1 is driven in rotation whereby, due to the cooperation between the grid 15 and the groove 17, the grid is moved to the left with uniform velocity.

The cylinder 1 as well as the glass supply conduit may be heated, if necessary, in order to maintain their temperatures.

The apertures 15' in the mixing grid are provided such that adjacent the cylinder axis there is a larger cross-section for the passage of material than at its circumference, so that the glass mainly passes adjacent to the grid axis and thereafter is moved towards the cylinder circumference by the centrifugal forces generated by the rotation of the cylinder. Thereby an intimate mixing of the glass with the entered waste material is obtained and after about one minute the direction of rotation of the cylinder is reversed whereby the grid is again moved towards its starting position, to the right in figure 1. Thereafter the rotation is stopped.

Between the cylinder 1 and the conduit 7 and likewise between the cylinder and the conduit 21 coupling connections (not shown) are provided such that the cylinder may be pivoted to the position which is schematically shown in figure 1. In this position a removal rod 22 may be moved into the cylinder, e.g. hydraulically driven, after sufficient cooling of the mixture has been obtained. Said rod engages the removal plate 16 and pushes it towards the other end of the cylinder, whereby the contents are pressed into a conduit 23, which is connected with the aperture 3. Said conduit may e.g. be connected to a machine for manufacturing pellets or marbles or differently shaped objects from the glass mass, whereby said objects contain the encapsulated waste material, so that it is no longer detrimental for the environment.

Thereafter the cylinder 1 is pivoted back to the position which is fully shown in figure 1 and the removal plate 16 is moved back to its starting position by the removal rod 23 whereafter a further charge may be started.

In order to increase its life, the cylinder may interiorly be provided with a ceramic coating.

It is also possible to drive the grid 15 instead of by the groove 17 and the cylinder rotation, by a hydraulic linear drive of the rod 18 secured to the grid. It is also envisaged to enter the waste material as well as the glass into the cylinder by means of a pump but in that case it must be guaranteed that no air is entered into the cylinder in connection with the danger of explosions.

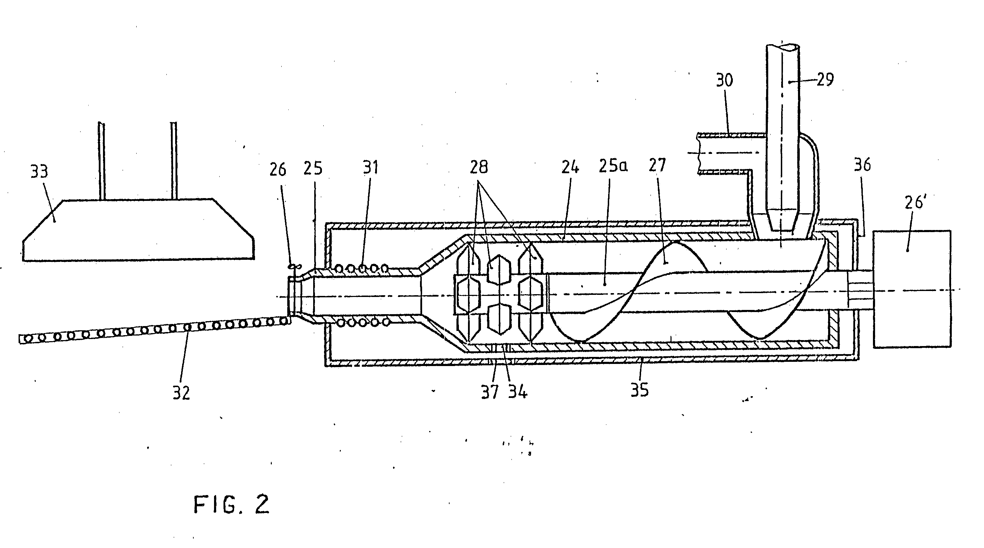

In figure 2 a different embodiment of the apparatus is shown. This comprises in fact an extrusion cylinder 24, having a nozzle 25 and a closure valve 26 adjacent to said nozzle. The extrusion cylinder 24 has a central shaft 252 which is drivable through a motor 261, a helical blade 27 being provided on said shaft, the circumferential edge of said blade engaging with the interior cylinder wall, as well as a number of radial blades 28.

The right-hand end of the cylinder, as seen in figure 2, is connected with a waste supply conduit 29 and with a glass supply conduit 30. The glass supply conduit is in this embodiment provided coaxially around the waste conduit 29. Adjacent to the nozzle 25 a cooling coil 31 is provided around the cylinder for cooling the mass leaving said nozzle, to plastic condition. The exiting plastic strand may be carried away on a roller conveyor 32. If desired, the strand may be divided into pieces. Also the exit end of the cylinder may be connected to a pelletising machine or similar apparatus.

In order to prevent that noxious vapours which possibly still adhere to the mass would enter the environment when the strand is discharged, suction means 33 may be provided over the roller conveyor.

It will be clear, that when simultaneously metered quantities of waste material and molten glass are supplied, these are mixed by the mixing helix 27 and thereafter by the mixing blades 28.

Any remains may be taken from the cylinder through a closable aperture 34. For safety reasons the extrusion cylinder is surrounded by a housing 35, provided with a vacuum conduit 36. Opposite to the discharge aperture 34 a corresponding discharge aperture 37 is provided in the housing.

A third embodiment of the apparatus according to the invention is shown in figure 3. Therein a glass supply conduit 38 has a somewhat widened portion 39 and a discharge portion 40. A supply conduit 41 for anorganic waste material extends sealingly through the wall of the glass supply conduit and has an end portion 42 within the widened portion 39 of the glass supply conduit, said end portion being provided with apertures, which are regularly spaced around its circumference. Molten glass and waste material are simultaneously supplied, the waste material under a pressure of e.g. $(3 \times 1.013 \times 10^5 - 4 \times 1.013 \times 10^5$ Pa $(3-4$ atm) whereby the waste material is injected into the liquid glass. The widened portion 39 of the glass conduit and the end portion 42 of the waste material conduit are received in a housing 43, which is connected with a vibrating system (not shown). During the supply of glass and waste the housing 43 is vibrated which furthers the intimate mixing of waste material and glass. The mixture is carried through the conduit portion 40 to a pelletising machine or similar machine (not shown).

This embodiment has no possibility for evacuating vapours and therefore is only suitable for inorganic material, such as stone, metal, particularly heavy metals, such as mercury and so on. If desired, the housing 43 may be surrounded by a second housing having an evacuating conduit like in the second embodiment.

The vibrating system may be replaced by a device issuing high frequency sound vibrations. In both cases the mixing is furthered but likewise the apertures in the end portion 42 of the waste conduit are kept unclogged.

It will be clear that the embodiments according to figure 2 and 3 relate to a continuously operating apparatus, contrary to that according to figure 1.

The valve 26 of the embodiment according to figure 2 serves for permitting closing the extrusion cylinder if breakdowns occur, since otherwise air could enter the apparatus and could reach the waste material in the conduit 29, whereby explosions or fire could occur. Also air could enter the glass conduit, which is undesirable.

All kinds of dangerous waste material may be encapsulated in low cost glass by the process and apparatus according to the invention, whereby said material becomes harmless, may be dumped at any place and if desired, may be used for rigidifying river banks or for similar purposes, while also at any moment encapsulated inorganic material may be recovered by again melting the glass pellets if at that time it would economically justified to reuse them. It is envisaged to wash the obtained pellets or other objects in an alkaline bath for removing possible adhering toxic remnants.

**Claims**

1. A process for rendering harmless dangerous chemical waste material by mixing it with a glass material, characterized in that the waste material, which is in liquid or powdery condition, is supplied into a closed container, thereafter the air present in this material is removed by evacuating the container and in this condition the material is mixed under pressure with liquid ordinary silica glass and after the completion of the mixing is solidified through cooling in the shape of cylinders, rods, blocks or pellets.

2. A process according to claim 1, characterized in that the waste material is preheated prior to evacuation in a separate container for driving out a portion of the air present therein.

3. Apparatus for carrying out the process according to claims 1 or 2, comprising a mixing cylinder having connected therewith a vacuum duct, and conduits for supplying waste material and glass, respectively, characterized in that the mixing cylinder (1) is adapted to be driven in rotation around its axis, and has a helical groove (17) in its interior wall, a mixing grid (15) being in engagement with said groove and reciprocatable in the longitudinal direction of the cylinder due to the rotation thereof, and a removal piston (216) which is reciprocatable in the longitudinal direction of the cylinder.

4. Apparatus according to claim 3, characterized in that the mixing cylinder (1) is pivotable by means of pivot pins to a position for connection with cooling means and with a glass press, in which position the removal piston is drivable in the direction of the glass supply connection.

5. Apparatus for carrying out a process according to claim 1 or 2, comprising a stationary mixing cylinder, provided with a central shaft, which is drivable in rotation, on which shaft a helical transport blade is provided and supply conduits for waste and molten glass have been provided at one end of the cylinder, opposite to the discharge end, said discharge end being provided with a cooling coil, an extrusion nozzle and a valve means, characterized by a series of mixing blades (28) provided between the transport blade (27) and the discharge end.

6. Apparatus for carrying out a process according to claim 1 or 2, characterized in that the container is a portion (39) of the glass supply conduit (38), which may be widened and within which the waste supply conduit (41) opens, said waste supply conduit having in its portion (42) within the glass supply conduit (39) regularly spaced outflow apertures (42a), the combination of conduits (38, 42) being received in a housing (43), to which a vibration device is connected.

**Patentansprüche**

1. Verfahren zum Unschädlichmachen von gefährlichem chemischem Abfallmaterial durch Mischen mit einem Glasmaterial, dadurch gekennzeichnet, dass man das Abfallmaterial, das in flüssigem oder pulvrigem Zustand vorliegt, in einen geschlossenen Behälter eingibt, danach die in diesem Material vorhandene Luft durch Setzen des Behälters unter Vakuum entfernt, und in diesem Zustand das Material unter Druck mit gewöhnlichem flüssigem Kieselglas mischt und nach dem vollständigem Mischen in Form von Zylindern, Stangen, Blöcken oder Kügelchen durch Kühlen verfestigt.

2. Verfahren nach Anspruch 1, dadurch gekennzeichnet, dass man das Abfallmaterial von dem Setzen unter Vakuum in einem getrennten Behälter vorheizt, um einen Teil der darin vorhandenen Luft auszutreiben.

3. Vorrichtung zur Durchführung des Verfahrens nach Anspruch 1 oder 2, umfassend einen Mischzylinder mit einem damit verbundenem Vakuumrohr, sowie Leitungen zum jeweiligen Zuführen von Abfallmaterial und Glas, dadurch gekennzeichnet, dass der Mischzylinder (1) zum Drehantrieb um seine Achse ausgebildet ist und in seiner Innenwandung eine schraubenförmige Nut (17) aufweist, wobei ein Mischgitter (15) mit dieser Nut zusammenwirkt und in Längsrichtung des Zylinders aufgrund seiner Drehung hin und her bewegbar ist, sowie einen in Längsrichtung des Zylinders hin und her bewegbaren Entladekolben (216) aufweist.

4. Vorrichtung nach Anspruch 3, dadurch gekennzeichnet, dass der Mischzylinder (1) mittels Lagerbolzen in eine zur Verbindung mit Kühlmitteln und mit einer Glaspresse bestimmten Lage kippbar ist, wobei in diese Lage der Entladenkolben in Richtung der Glaszufuhrverbindung antreibbar ist.

5. Vorrichtung zur Durchführung des Verfahrens nach Anspruch 1 oder 2, umfassend einen stillstehenden Mischzylinder, der mit einer zentralen, zur Drehung antreibbaren Welle versehen ist, wobei auf dieser Welle eine schraubenförmige Transportschaufel und am einen Ende des Zylinders, gegenüber dem Entladeende, Zufuhrleitungen für Abfall und geschmolzenes Glas vorgesehen sind, und wobei dieses Entladeende mit einer Kühlwindung, einer Extrusionsdüse und einem Ventilmittel versehen ist, gekennzeichnet durch eine Reihe von Mischschaufeln (28), die zwischen der Transportschaufel (27) und dem Entladeende vorgesehen sind.

6. Vorrichtung zur Durchführung des Verfahrens nach Anspruch 1 oder 2, dadurch gekennzeichnet, dass der Behälter ein Teil (39) des Glaszufuhrrohres (38) ist, das erweitert sein kann und in welches das Abfallzufuhrrohr (41) einmündet, wobei dieses Abfallzufuhrrohr in seinem innerhalb des Glaszufuhrrohres (39) liegenden Teil (42) regelmässig beabstandete Ausflussöffnungen (42a) aufweist und die Kombination von Leitungen (38, 42) in einem mit einem Schwingungsmittel verbundenen Gehäuse (43) angeordnet ist.

## Revendications

1. Procédé pour rendre inoffensif un matériau de rebut chimique dangereux en le mélangeant avec un matériau vitreux, caractérisé en ce que l'on amène à un récipient fermé le matériau de rebut, qui se trouve à l'état liquide ou pulvérulent, puis on élimine l'air présent dans ce matériau en faisant le vide dans le récipient et dans cet état on mélange sous pression le matériau avec du verre ordinaire de silice à l'état liquide et après que le mélange soit complet on le solidifie par refroidissement en forme de cylindres, triges, blocs ou billes.

2. Procédé selon la revendication 1, caractérisé en ce que l'on préchauffe le matériau de rebut dans un récipient séparé avant de faire le vide, afin d'en extraire une partie de l'air qui s'y trouve.

3. Dispositif pour mettre en oeuvre le procédé selon les revendications 1 ou 2, comportant un cylindre de mélange auquel sont reliés un tube de vide et des conduites pour amener respectivement du matériau de rebut et du verre, caractérisé en ce que le cylindre de mélange (1) est conçu de façon à être actionné en rotation autour de son axe et comporte en sa paroi intérieure une gorge hélicoïdale (17), tandis qu'une grille de mélange (15) coopère avec cette gorge et peut être actionnée en va-et-vient dans la direction longitudinale du cylindre par suite de la rotation de celui-ci, ainsi qu'un piston d'extraction (216) qui peut être actionné en va-et-vient dans la direction longitudinale du cylindre.

4. Dispositif pour mettre en oeuvre le procédé selon la revendication 3, caractérisé en ce que le cylindre de mélange (1) peut pivoter au moyen de goujons de pivot jusqu'à une position où il peut être relié à des moyens de refroidissement et à une presse pour le verre, tandis que dans cette position le piston d'extraction peut être actionné dans la direction de la connection d'amenée de verre.

5. Dispositif pour mettre en oeuvre le procédé selon les revendication 1 ou 2, comportant un cylindre de mélange stationnaire pourvu d'une arbre central qui peut être actionné en rotation, tandis que sur cet arbre est prévue une pale de transport hélicoïdale et que des conduites d'amenée pour le rebut et le verre fondu sont prévues à une extrémité du cylindre qui est opposée à l'extrémité de décharge, cette extrémité de décharge étant pourvue d'un enroulement de refroidissement, d'une buse d'extrusion et de moyens de vanne, caractérisé par une série de pales de mélange (28) prévues entre la pale de transport (27) et l'extrémité de décharge.

6. Dispositif pour mettre en oeuvre le procédé selon les revendications 1 ou 2, caractérisé en ce que le récipient est une partie (39) de la conduite d'amenée de verre (38) qui peut être élargie et dans laquelle s'ouvre la conduite d'amenée de rebut, cette conduite d'amenée de rebut présentant en sa partie (42) située au sein de la conduite d'amenée de verre (39) des ouvertures de sortie d'écoulement (42a) régulièrement espacées, la combinaison de conduites (38, 42) étant logée dans un boîtier (43) auquel est relié un dispositif vibrant.

FIG. 1

FIG. 2

FIG. 3

FIG. 4